# EUROPEAN PATENT APPLICATION

(11) **EP 3 607 812 A1**
(43) Date of publication of application: **12.02.2020**
(21) Application number: 19190370.7
(22) Date of filing: 06.08.2019
(51) Int. Cl.: A01D 34/416

(54) **HEAD FOR A HEDGE TRIMMER**

(30) Priority: 08.08.2018 IT 201800007966
(71) Applicant: Tecomec S.r.l., 42124 Reggio Emilia (IT)
(72) Inventor: CIGARINI, Enrico, 42123 REGGIO EMILIA (IT)
(74) Representative: Paparo, Aldo

(57) **Abstract**

A head (1) for a hedge trimmer comprising a main body (2), having a disc-shaped conformation, which can be connected to a drive shaft of a hedge trimmer to be placed in rotation about an axis of rotation (X). The main body (2) has at least one pair of primary seats (5) and one pair of secondary seats (6), each primary seat (5a) of the pair of primary seats (5) and each secondary seat (6a) of the pair of secondary seats (6) is a through seat. The pair of primary seats (5) is adapted to house a primary segment (S1) realised with a first cutting wire and arranged in a U-shaped arrangement between the primary seats (5a). The pair of secondary seats (6) is adapted to house a secondary segment (S2) realised with a second cutting wire and arranged in a U-shaped arrangement between the secondary seats (6a). Each primary seat (5a) of the pair of primary seats (5) has a primary transverse dimension (D1) and each secondary seat (6a) of the pair of secondary seats (6) has a secondary transverse dimension (D2).

## Description

The present invention relates to a head for a hedge trimmer, in particular a head adapted to allow the cutting of the vegetation that grows in the interstices of interlocking blocks.

Hedge trimmer is intended as an agricultural machine configured to cut weeds and hedges through the use of a cutting tool, driven by a small electric motor or combustion engine, and manoeuvred by means of a special handle.

Hedge trimmers are used to cut the grass in small gardens or to trim portions of larger gardens which are difficult for a normal lawn mower to access, such as for example contours of poles, trees, walls and pavements. Such tools are also used to remove vegetation on portions of land where the height reached by the grass and vegetation makes the use of a lawn mower unsuitable.

A hedge trimmer comprises a motor, electric or heat (this type of motor is used for hedge trimmers intended for heavy duty use), adapted to impart rotation to the cutting tool.

The motor is connected to a rod generally made of light alloy with a hollow cross section and configured to house therein, arranged on a plurality of self-lubricating bearings, a steel rod which has the task of transmitting the rotary motion imparted by the motor. In other words, the steel rod has the function of drive shaft and is configured to put the cutting tool in rotation.

The steel rod and the cutting tool are operationally connected by a bevel gear that allows a rotatable coupling between the two elements.

Generally, the bevel gear comprises a pair of gears with an angle between them of about 35 degrees.

A first type of cutting tool can comprise a metal disc of various sizes and shapes. Metal discs are particularly suitable for cutting resistant weeds, brambles, hedges and young trunks presenting high resistance to the action of cutting.

A second type of cutting tool is tools with cutting wire.

Such tools are particularly suitable for the removal of grass and weeds and exploit the cutting action of a wire (or multiple wires), preferably made of polymeric material, put in rotation with respect to a central axis of rotation.

In particular, the wire is housed in suitable seats and protrudes radially with respect to the axis of rotation of the cutting head.

The cutting wire can be wound on special supports or used in shorter lengths and connected directly to the head.

The heads generally have a disc-shaped conformation and are configured to house and allow the anchoring of the aforementioned cutting wires.

The wire tools are more widely used because they combine a high degree of safety with a remarkable flexibility of use.

Disadvantageously, the common hedge trimmers are particularly ineffective in the removal of weeds which grow in the interstices of interlocking blocks.

This operation is commonly carried out by tilting the hedge trimmer so that the cutting wire is able to reach the weeds.

This movement of the hedge trimmer is particularly uncomfortable for the user. Furthermore, the cutting wire very often incurs breakage due to accidental impacts with the ground.

To overcome this drawback, cutting heads have been developed which are configured to house cutting wires having increased dimensions with respect to the commonly used wire in order to have a greater resistance to the impacts to which the wire is subjected during movement along the lying plane of the vegetation to be cut.

Such cutting heads generally comprise a plate-like element adapted to rotate about an axis perpendicular to its main lying plane and provided with a plurality of through seats of the same section configured to house the aforementioned cutting wire (or wires).

Disadvantageously, the increase of the cutting wire section determines an increase in the effort to which the wire itself is subjected during the rotation due to the centrifugal acceleration that acts radially to the axis of rotation and determines a reduction in the operating life of the cutting wire, even when used for cutting that does not involve the interstices of interlocking blocks.

The object of the present invention is to provide a head for a hedge trimmer of high efficiency and operational flexibility and which preserves the useful life of the cutting wires used.

The object is reached by a head for a hedge trimmer comprising the characteristics disclosed in one or more of the claims.

The dependent claims correspond to possible embodiments of the invention.

Further characteristics and advantages of the present invention will become more apparent from the indicative and thus non-limiting description of an embodiment of a head for a hedge trimmer.

This description will be set out below with reference to the appended drawings, which are provided solely for indicative and therefore non-limiting purposes, in which:
- figure 1 is a partially exploded perspective view of a head for a hedge trimmer in accordance with an embodiment of the present invention;
- figure 2 is a schematic view from above of the head for a hedge trimmer of figure 1 in an assembled configuration;
- figure 3 is a schematic lateral view of the head for a hedge trimmer of figure 2;
- figure 4 is a schematic view from below of the head for a hedge trimmer of figure 2;
- figure 5 is a section of a portion of the head for a hedge trimmer according to the line V-V of figure 2;
- figure 6 is a section of a portion of the head for a hedge trimmer according to the line VI-VI of figure 4;
- figure 7 is a perspective view of a head for a hedge trimmer in accordance with a further possible embodiment of the present invention;
- figure 8 is an exploded view from above of the head for a hedge trimmer of figure 7;
- figure 9 is an exploded view from below of the head for a hedge trimmer of figure 7. With reference to the appended figures, the reference numeral 1 has been used to indicate a head for a hedge trimmer, hereinafter denoted by head 1.

The head 1 comprises a main body 2 having a substantially disc-shaped conformation. The term "disc-shaped conformation" is intended as a flattened conformation, or in any case one in which the main body 2 extends mainly in two directions, and preferably substantially axially symmetrical, at least with reference to the overall appearance of the main body itself.

As illustrated in the appended figures, the main body 2 has a central seat 3, formed in an upper zone 4, adapted to allow the connection of the head 1 to the drive shaft of the hedge trimmer to move it during an operating configuration.

In other words, the main body 2 can be connected to the drive shaft of a hedge trimmer to be rotated about an axis of rotation "X".

The main body 2 extends mainly in the two directions transverse to the axis of rotation "X". In other words, the axis of rotation "X" is, preferably, an axis passing through the centre of the main body 2 and substantially perpendicular to a main lying plane of the main body 2.

During a normal configuration of use of the head 1, the axis of rotation "X" is substantially vertical or slightly inclined and the above-mentioned main lying plane is substantially parallel to the ground or slightly inclined.

The main body 2 has two primary seats 5a together defining a pair of primary seats 5. The main body 2 also has two secondary seats 6a together defining a pair of secondary seats 6.

In particular, the main body 2 has a plurality of pairs of primary seats 5 and a plurality of pairs of secondary seats 6. The pairs of primary seats 5 are arranged alternating with the pairs of secondary seats 6 according to a circumferential direction about the axis of rotation "X". Advantageously, this alternating arrangement determines a substantially symmetrical profile which induces limited stresses on the drive shaft.

Preferably, each primary seat 5a and each secondary seat 6a is a through type of seat, i.e. constitutes a passage that crosses the entire thickness of the main body 2 from side to side in the area in which the seat is obtained. Each pair of primary seats 5 is adapted to house a primary segment S1 realised with a first cutting wire and arranged in a U-shaped arrangement between the primary seats 5a. When inserting the primary segment S1 in the primary seats 5a in a U-shaped arrangement, the concavity is directed towards a lower zone 7 of the main body 2.

Each pair of secondary seats 6 is adapted to house a secondary segment S2 realised with a second cutting wire and arranged in a U-shaped arrangement between the secondary seats 6a. When inserting the secondary segment S2 in the secondary seats 6a in a U-shaped arrangement, the concavity is directed towards the upper zone 4.

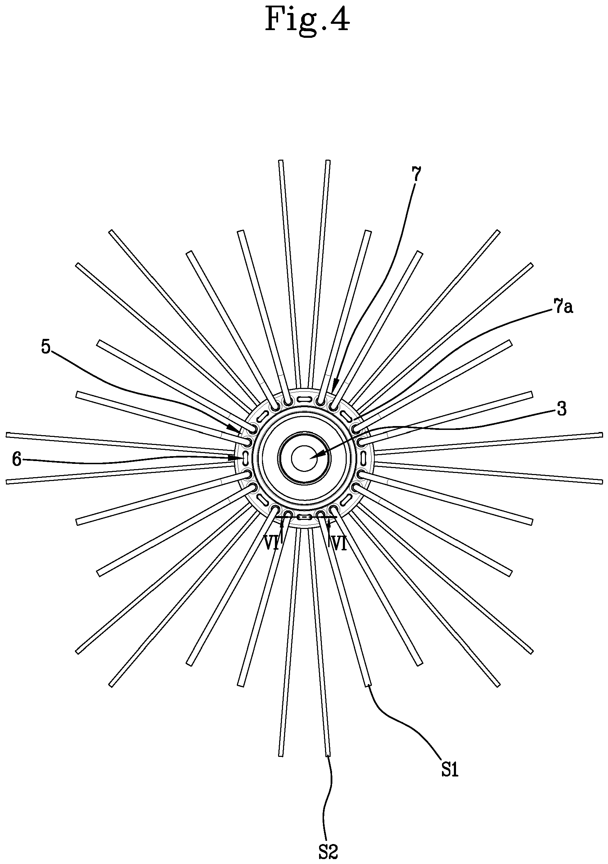

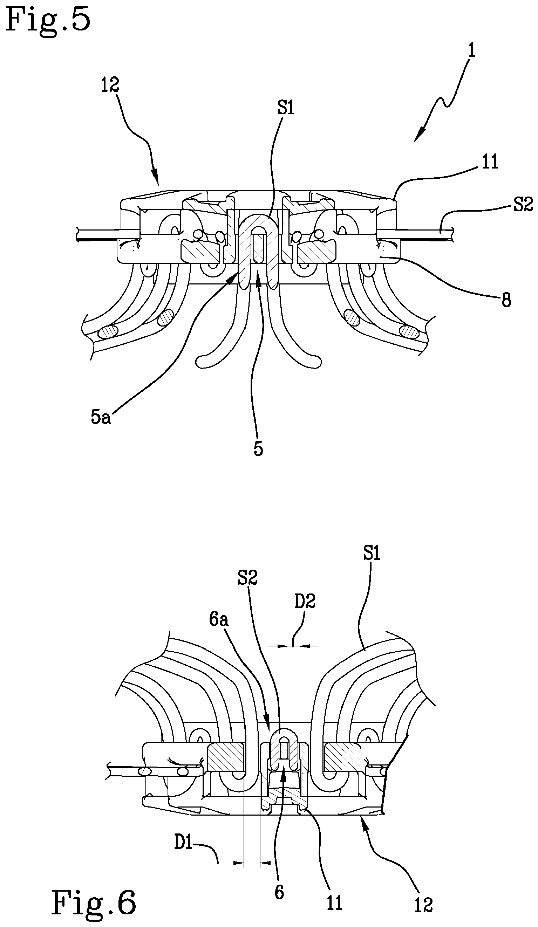

Each primary seat 5a has a first transverse dimension D1 (figure 5), for example a diameter in the case wherein the primary seats 5a have a circular cross section, and each secondary seat 6a has a second transverse dimension D2 (figure 4), for example a diameter in the case wherein the secondary seats 6a have a circular cross section.

In particular, the second transverse dimension D2 is less than the first transverse dimension D1.

In other words, the first cutting wire, and consequently the primary segment S1, can have a transverse dimension, for example a diameter, greater than the transverse dimension, for example the diameter, of the second cutting wire and consequently of the secondary segment S2.

Furthermore, or as an alternative to what is specified above, the primary segment S1 has different mechanical and/or physical and/or geometric properties from the secondary segment S2.

Advantageously, the primary segments S1 can have a greater mechanical strength than the secondary segments S2, which makes them particularly effective for the removal of weeds which grow in the interstices of interlocking blocks.

Preferably, at least the primary seats 5a extend starting from a base surface 7a of the main body 2 which defines the above-mentioned lower zone 7 of the head 1 in normal conditions of use. Still more preferably both the primary seats 5a and the secondary seats 6a extend starting from the aforementioned base surface 7a of the main body 2.

Preferably, the primary seats 5a, have an extension direction substantially parallel to the axis of rotation "X". Still more preferably both the primary seats 5a and the secondary seats 6a have an extension direction substantially parallel to the axis of rotation "X". In accordance with different embodiments not shown in the appended figures, the primary seats 5a and/or the secondary seats 6a can have a different extension direction from that previously described without altering the inventive concept of the present invention. For example, the secondary seats 6a can have an extension direction substantially transverse to the axis of rotation "X".

Preferably, the primary seats 5a and the secondary seats 6a are arranged in an annular perimeter portion 8 of the main body 2 with respect to the axis of rotation "X". Preferably the annular perimeter portion 8 has a lower thickness "Y", measured along the axis of rotation "X", than the thickness of a central portion of the main body 2 from which the annular perimeter portion 8 extends radially.

As illustrated in the appended figures, the main body 2, preferably the annular perimeter portion 8, has a bevelled perimeter edge 9 at the pair of secondary seats 6.

In particular, the bevelled edge 9 can be defined by an annular countersink 9 of output for each secondary seat 6a.

Advantageously, the bevelled perimeter edge 9 helps to limit the wear due to the contact between the secondary segment S2 and the main body 2, contributing to an increase in its operational life.

According to alternative embodiments of the present invention not illustrated in the appended figures, pairs of primary seats 5 and pairs of secondary seats 6 can have a different arrangement than that previously indicated.

The annular perimeter portion 8 has, preferably, a plurality of radial fins 10. In particular, each radial fin 10 is preferably arranged between a pair of primary seats 5 and a pair of secondary seats 6 at the upper zone 4 of the head 1 in normal conditions of use.

Advantageously, the radial fins 10 determine a separation between the primary segments S1 and the secondary segments S2 housed in two pairs of consecutive seats in order to inhibit their mutual interaction.

The head 1 can comprise, in addition, a deflector element 11 arranged above a pair of secondary seats 6 at the upper zone 4 of the head 1.

This deflector element 11 deflects the secondary segment S2 so that it assumes a substantially radial arrangement with respect to the axis of rotation "X".

Advantageously, the deflector element 11 prevents, during the first rotations of the main body 2, the secondary segment S2 from intercepting the drive shaft, preserving the duration of its operational life.

Preferably, the deflector element 11 has an arched surface 11a, preferably with a parabolic extension.

According to a particular embodiment not shown in the appended figures, the deflector element 11 can have a grooved profile without altering the inventive concept of the present invention.

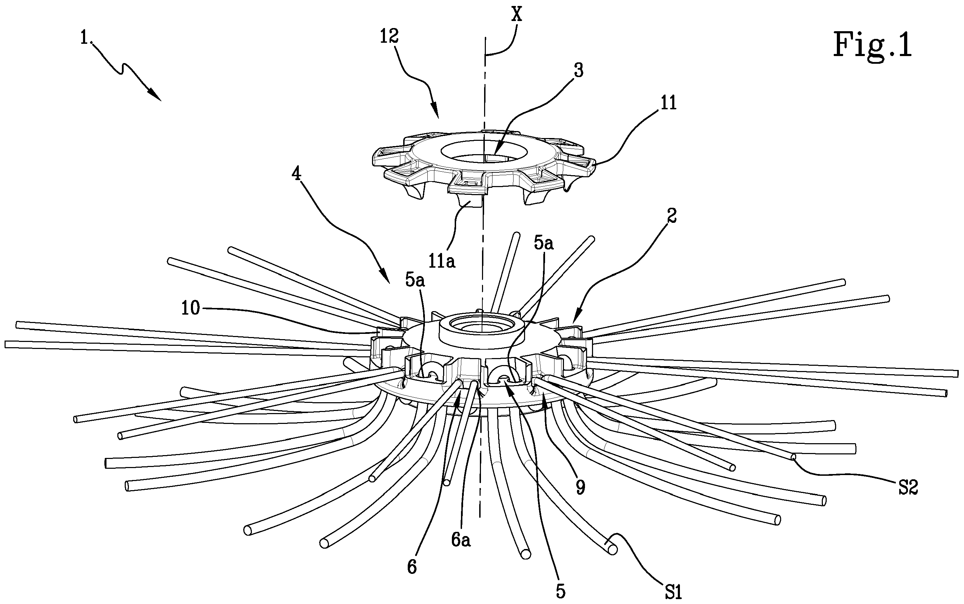

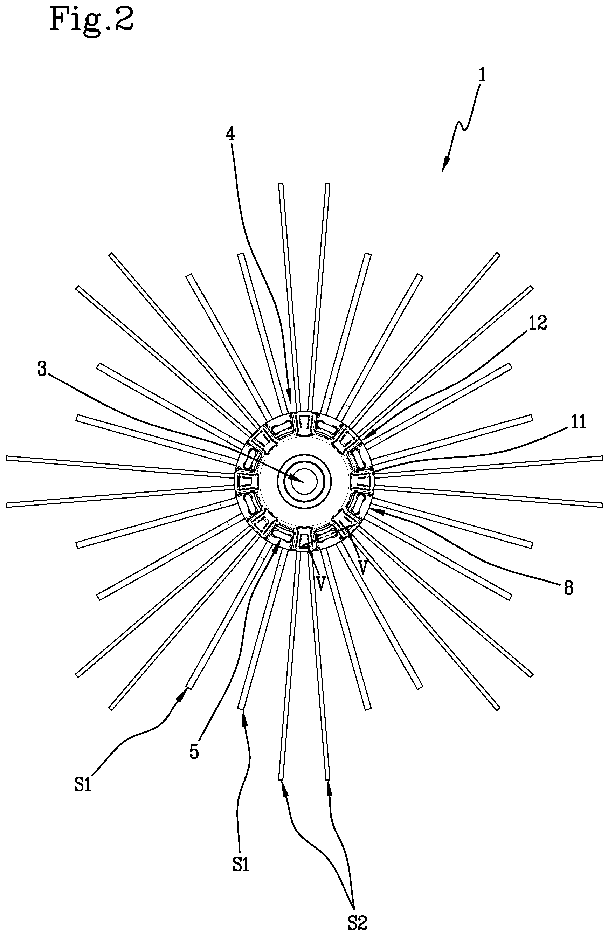

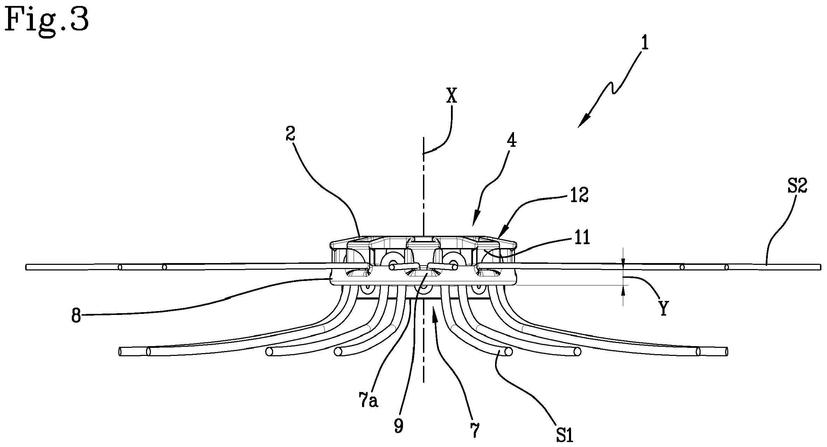

In accordance with the embodiment illustrated in figures 1-6, the head 1 preferably comprises a cover element 12 arranged on the main body 2 at the above-mentioned upper zone 4 and supporting a plurality of deflector elements 11.

This cover element 12 can be connected to the main body 2 through coupling means or a shape coupling, for example, a male-female type of coupling.

Preferably, each deflector element 11 of the cover element 12 is arranged above a respective pair of secondary seats 6 to deflect a respective secondary segment S2. In the case wherein the radial fins 10 are provided, the deflector elements 11 are housed between the radial fins 10 preferably by shape coupling and/or by interference with the main body 2.

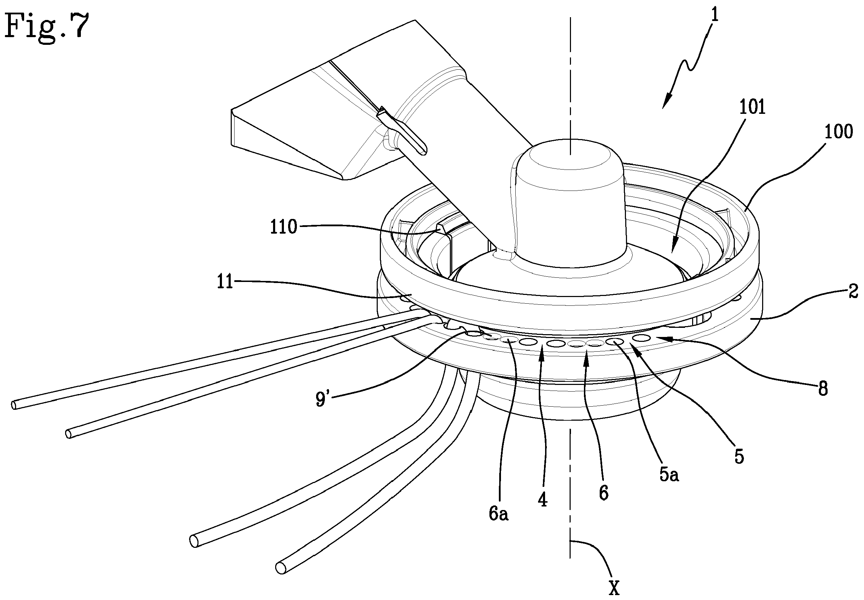

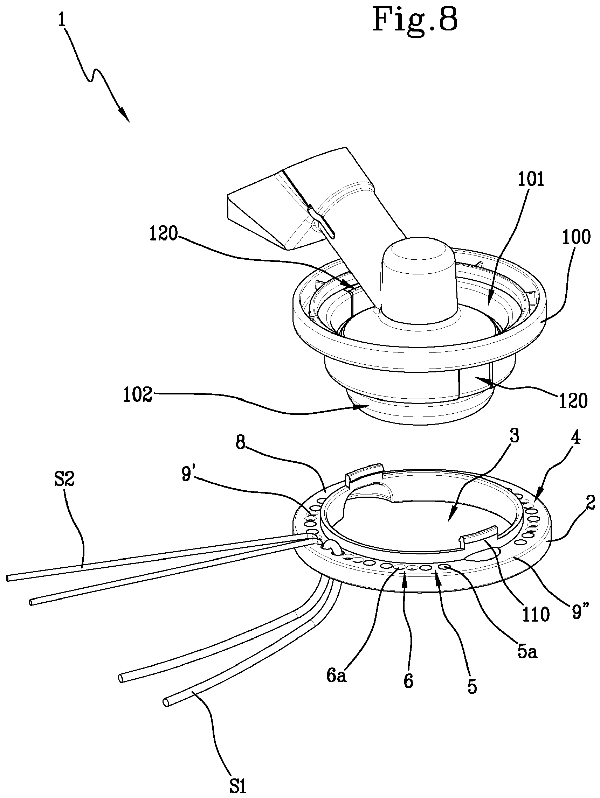

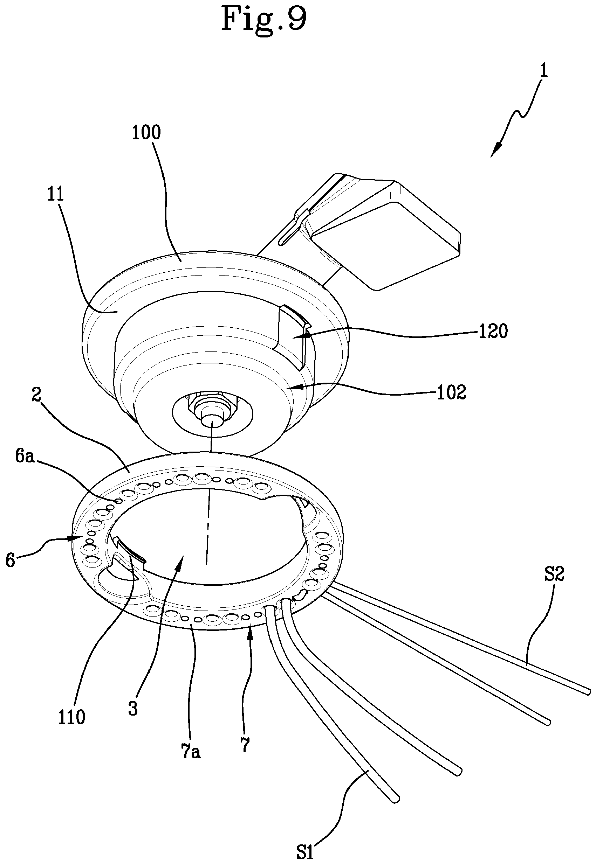

In accordance with the embodiment illustrated in figures 7-9, the head 1 comprises a connecting body 100 configured to connect the main body 2 to the drive shaft of the hedge trimmer.

The connecting body 100 has a fixing portion 101 adapted to house a respective portion of the drive shaft and a coupling portion 102 which can be inserted at least partially in the central seat 3 of the main body 2.

Advantageously, the main body 2 and the connecting body 100 respectively have a pair of anchoring fins 110 and a respective pair of anchoring seats 120.

Alternatively, the anchoring fins 110 can be arranged on the connecting body 100 and the anchoring seats 120 can be formed in the main body 2 without altering the inventive concept underlying the present invention.

The anchoring fins 110 are diametrically opposite and can be coupled with the respective anchoring seats 120 to realise a stable coupling between the main body 2 and the connecting body 100.

In this way, the main body 2 can be decoupled from the connecting body 100, for example to provide a replacement of the segments S1, S2, acting on the anchoring fins 110.

Furthermore, the connecting body 100 can be connected to the drive shaft through generic connection means, for example bolts or shape couplings.

Advantageously, the main body 2 has a bevelled perimeter edge 9 at the pair of secondary seats 6 which allows limiting the wear due to the contact between the secondary segment S2 and the main body 2.

In particular, the bevelled edge 9 is defined by an annular countersink 9' of output for each secondary seat 6a and by a bevel 9" on an outer circular edge of the main body 2.

Furthermore, the head 1 has a deflector element 11 made in one piece with the connecting body 100 and defined by an annular-shape radial expansion of the connecting body 100.

In particular, the deflector element 11 is configured to deflect the secondary segment S2 so that it assumes a substantially radial arrangement with respect to the axis of rotation "X".

According to alternative embodiments not illustrated in the appended figures, the head 1 can comprise a different number of anchoring fins 110 and/or the anchoring fins can have a different arrangement from that described above without altering the inventive concept underlying the present invention.

In use a primary segment S1 obtained from the first cutting wire is housed inside each pair of primary seats 5 so that the primary segments S1 have a U-arrangement with the concavity turned towards the base surface 7a. In this way the primary segments S1 protrude from the lower zone 7 of the main body 2 and define a cutting plane substantially perpendicular to the axis of rotation "X" and outside below the main body 2 to allow the removal of weeds which grow in the interstices between the interlocking blocks without the main body 2 interfering with them. A secondary segment S2 obtained from the second cutting wire is housed inside each pair of secondary seats 6 so that the secondary segments S2 have a U-arrangement with the concavity turned towards the upper zone 4.

The secondary segments S2 protrude upwards and are deflected by at least one deflector element 11 so that their footprint is external to that of the drive shaft also during the initial phase of the rotation of the main body 2.

In fact, the main body 2 is put in rotation with respect to the axis of rotation "X" by the drive shaft to which it is connected by means of the central seat 3.

The present invention also relates to a method for loading a head 1 for a hedge trimmer comprising the steps of inserting at least one primary segment S1 in a respective pair of said primary seats 5 and inserting at least one secondary segment S2 in a respective pair of said secondary seats 6. In particular, the at least one primary segment S1 is inserted in the respective pair of primary seats 5 in a direction leading towards a lower portion of the head intended to be turned towards the ground, and the at least one secondary segment S2 is inserted in the respective pair of secondary seats 6 in a direction leading towards an upper portion of the head opposite the lower portion.

Preferably, the pair of primary seats 5 and/or the primary segment S1 are configured so that, during a configuration of use, the at least one primary segment S1 has a first, more internal section, gradually moving away from the axis of rotation "X" and a second, more external section substantially perpendicular to the axis of rotation "X". Furthermore, the pair of secondary seats 6 and/or the secondary segment S2 are configured in such a way that, during a configuration of use, the at least one secondary segment S2 has a section protruding from the respective secondary seat 6 arranged substantially perpendicular to the axis of rotation (X).

Preferably, the primary segment S1 has a greater cross section than the secondary segment S2. In accordance with a preferred embodiment of the present method, each primary seat 5a has a first transverse dimension D1 larger than a second transverse dimension D2 of each secondary seat 6.

Furthermore, the steps of inserting the segments S1, S2 can be realised by arranging the segments according to a curved shape having concavity turned towards, and preferably resting on, the main body 2, and wherein the concavity of the primary segment S1 is turned the opposite way with respect to the concavity of the secondary segment S2.

Advantageously, the primary segment S1 can have different physical and/or chemical parameters with respect to the secondary segment S2. It can therefore be seen that the present invention achieves the intended objects thanks to a head for a hedge trimmer of high efficiency and operational flexibility due to the presence of at least one pair of primary seats and one pair of secondary seats adapted to respectively house a primary segment realised with a first cutting wire and a secondary segment realised with a second cutting wire, of different transverse dimensions from one another, which allow the removal of both weeds growing through interlocking blocks and vegetation that grows freely, for example in a lawn.

Advantageously, the head ensures high operating flexibility, allowing the user to mount at his discretion primary segments and/or secondary segments based on the use for which the hedge trimmer is intended.

Advantageously, the radial fins separate the primary and secondary segments housed in consecutive pairs of seats so as to prevent the mutual interaction that could cause the breakage of the cutting wires.

Advantageously, the deflector element prevents accidental breakages of the secondary segment which can be realised following impacts with the drive shaft of the hedge trimmer.

Advantageously, the alternating arrangement of the pairs of primary and secondary seats determines a substantially symmetrical profile which reduces the efforts on the drive shaft of the hedge trimmer.

Advantageously, the presence of the anchoring fins and of the respective anchoring seats allows a quick removal of the main body from the connecting body 100 to perform cleaning and/or replacement operations of the cutting wires.

## Claims

1. A head for a hedge trimmer comprising:
a main body (2) that can be connected to a drive shaft of a hedge trimmer to be placed in rotation about an axis of rotation (X), said main body (2) having a disc-shaped conformation;
wherein said main body (2) has at least one plurality of pairs of primary seats (5) and a plurality of pairs of secondary seats (6), each primary seat (5a) and each secondary seat (6a) being a through seat, wherein each pair of primary seats (5) is adapted to house a primary segment (S1) realised with a first cutting wire and arranged in a U-shaped arrangement between said primary seats (5a) and wherein each pair of secondary seats (6) is adapted to house a secondary segment (S2) realised with a second cutting wire and arranged in a U-shaped arrangement between said secondary seats (6a);
**characterised in that** said pairs of primary seats (5) alternate with said pairs of secondary seats (6) according to a circumferential direction about said axis of rotation (X);
and **in that** each primary seat (5a) of said pair of primary seats (5) has a first transverse dimension (D1) for housing a primary segment (S1) and each secondary seat (6a) of said pair of secondary seats (6) has a second transverse dimension (D2) for housing a secondary segment (S2), said first transverse dimension (D1) being greater than said second transverse dimension (D2) so that the pair of primary seats can house a primary segment (S1) having a larger transverse dimension than the transverse dimension of said secondary segment (S2) and different mechanical and/or physical and/or geometric properties from the secondary segment (S2).

2. The head for a hedge trimmer according to claim 1, comprising a connecting body (100) configured to connect said main body (2) to the drive shaft of a hedge trimmer, said connecting body (100) having a fixing portion (101) adapted to house a respective portion of the drive shaft and a coupling portion (102) which can be coupled to said main body (2), in particular which can be inserted at least partially in a central seat (3) of said main body (2).

3. The head for a hedge trimmer according to claim 2, wherein said main body (2) and said connecting body (100) are connected to each other by a coupling using a pair of anchoring fins (110), realised on one of said main body (2) and connecting body (100), and a respective pair of anchoring seats (120) realised on the other of said main body (2) and connecting body (100), said anchoring fins (110) being able to be coupled to said anchoring seats (120) to realise a stable coupling between said main body (2) and said connecting body (100).

4. The head for a hedge trimmer according to one or more of the preceding claims, wherein said primary seats (5a) and said secondary seats (6a) extend starting from a base surface (7a) of said main body (2) defining a lower zone (7) of said head (1) in normal conditions of use.

5. The head for a hedge trimmer according to any one of the preceding claims, wherein said primary seats (5a), and preferably also said secondary seats (6a), have an extension direction arranged along the axis of rotation (X) of the main body (2), preferably parallel to the axis of rotation (X) of the main body (2).

6. The head for a hedge trimmer according to one or more of the preceding claims, wherein said main body (2) has a bevelled perimeter edge (9) at said pair of secondary seats (6), in particular said bevelled edge (9) being defined by an annular countersink (9') of output for each secondary seat (6a).

7. The head for a hedge trimmer according to one or more of the preceding claims, wherein said primary seats (5a) and said secondary seats (6a) are arranged in an external perimeter portion (8) of said main body (2) with respect to said axis of rotation (X),
preferably said external perimeter portion (8) having a lower thickness (Y), measured along said axis of rotation (X), than the thickness of a radially internal portion of said main body (2).

8. The head for a hedge trimmer according to one or more of the preceding claims, comprising a deflector element (11) having a preferably arched shape, arranged above said pair of secondary seats (6) at a head surface of said main body (2) defining an upper zone (4) of said head (1) in normal conditions of use, said deflector element (11) being configured to radially deviate said secondary segment (S2) inserted in the respective pair of secondary seats (6), preferably said deflector element (11) being realised in one piece with said connecting body (100) and defined by an annular-shape radial expansion of said connecting body (100).

9. The head for a hedge trimmer according to one or more of the preceding claims, wherein said pairs of primary seats (5) and said pairs of secondary seats (6) are arranged in an annular perimeter portion (8) of said main body (2) with respect to said axis of rotation (X), and wherein said annular perimeter portion (8) has a plurality of radial fins (10), each radial fin (10) being arranged between a pair of primary seats (5) and a pair of secondary seats (6) at a head surface of said main body (2) defining an upper zone (4) of said head (1) in normal conditions of use.

10. The head for a hedge trimmer according to claim 9, when dependent on claim 8, comprising a cover element (12) arranged on the main body (2) at said upper zone (4) and supporting a plurality of deflector elements (11), each deflector element (11) being arranged above a pair of secondary seats (6), preferably said radial fins (10) being configured to house said deflector elements (11).

11. A method for loading a head for a hedge trimmer, wherein said head comprises a main body (2) that can be connected to a drive shaft of a hedge trimmer to be placed in rotation about an axis of rotation (X), said main body (2) having a disc-shaped conformation and having at least one pair of primary seats (5) and one pair of secondary seats (6), each primary seat (5a) of said pair of said primary seats (5) and each secondary seat (6a) of said pair of said secondary seats (6) being a through seat; said method comprising the steps of inserting at least one primary segment (S1) in a respective pair of said primary seats (5) and inserting at least one secondary segment (S2) in a respective pair of said secondary seats (6), wherein said at least one primary segment (S1) is inserted in the respective pair of primary seats (5) in a direction leading towards a lower portion of the head intended to be turned towards the ground, and wherein said at least one secondary segment (S2) is inserted in the respective pair of secondary seats (6) in a direction leading towards an upper portion of the head opposite said lower portion.

12. The method according to claim 11, wherein said primary seats (5) and secondary seats (6) and/or said primary segments (S1) and secondary segments (S2) are configured in such a way that, during a configuration of use, said at least one primary segment (S1) has a first, more internal section, gradually moving away from said axis of rotation (X) and a second, more external section, substantially perpendicular to the axis of rotation (X); and in such a way that, during a configuration of use, said at least one secondary segment (S2) has a section protruding from the respective secondary seat (6) arranged substantially perpendicular to the axis of rotation (X).

13. The method according to claim 11 or 12, wherein said at least one primary segment (S1) has a larger cross section than the secondary segment (S2), preferably each primary seat (5a) having a larger first transverse dimension (D1) than a second transverse dimension (D2) of each secondary seat (6).

14. The method according to one or more of the claims from 11 to 13, wherein said steps of inserting the segments (S1, S2) are realised by arranging said segments according to a curved shape having concavity turned towards, and preferably resting on, the main body (2), and wherein the concavity of said at least one primary segment (S1) is turned the opposite way with respect to the concavity of said at least one secondary segment (S2).

15. The method according to one or more of the preceding claims 11-14, wherein said at least one primary segment (S1) has different physical and/or chemical parameters with respect to the secondary segment (S2).
